# EUROPEAN PATENT APPLICATION

(11) **EP 4 704 257 A1**
(43) Date of publication of application: **04.03.2026**
(21) Application number: 23962948.8
(22) Date of filing: 29.12.2023
(51) Int. Cl.: H01R 13/52

(54) **CHARGING INTERFACE AND WEARABLE DEVICE**

(71) Applicant: Shenzhen Shokz Co., Ltd., Shenzhen, Guangdong 518108 (CN)
(72) Inventor: KE, Hao, Shenzhen, Guangdong 518108 (CN); LI, Chaowu, Shenzhen, Guangdong 518108 (CN); LI, Yongjian, Shenzhen, Guangdong 518108 (CN)
(74) Representative: Wang, Bo
(86) International application number: PCT/CN2023/143662
(87) International publication number: WO 2025/138274

(57) **Abstract**

The present disclosure relates to a charging interface of a wearable device. The charging interface of the wearable device includes a charging receptacle and a charging terminal. The charging receptacle includes a charging receptacle base, a first mounting portion, a second mounting portion, and a third mounting portion. The first mounting portion, the second mounting portion, and the third mounting portion are connected to a first side of the charging receptacle base. The first side faces an exterior of the wearable device, and a third-party charging plug is connected to the charging interface from the first side. The first mounting portion and the second mounting portion are spaced apart, such that water present on a surface of the first mounting portion facing the charging plug and water present on a surface of the second mounting portion facing the charging plug are not connected. The charging terminal includes a positive terminal and a negative terminal. The positive terminal is mounted on the first mounting portion, and the negative terminal is mounted on the second mounting portion.

## Description

### TECHNICAL FIELD

The present disclosure relates to the field of waterproof wearable devices, and in particular, to a charging interface and a wearable device.

### BACKGROUND

With the development of technology, wearable devices are increasingly favored by people, such as wearable smart glasses, smart watches, and earphones. The wearable devices are usually equipped with a rechargeable battery and a charging interface. The wearable devices have a wide range of application scenarios. Among the various application scenarios, there are some specific scenarios that involve exposure to a large amount of water, such as using the wearable devices outdoors in the rain or while swimming. In such cases, the use of the wearable devices may involve contact with water, and the charging interface often gets wet. Therefore, how to avoid short circuit in the charging interface during charging is an urgent problem to be solved.

### SUMMARY

In a first aspect, one or more embodiments of the present disclosure provide a charging interface of a wearable device, comprising: a charging receptacle, a charging terminal, and a data transmission terminal. The charging receptacle comprises a charging receptacle base, a first mounting portion, a second mounting portion, and a third mounting portion. The first mounting portion, the second mounting portion, and the third mounting portion are connected to a first side of the charging receptacle base. The first side faces an exterior of the wearable device. A third-party charging plug is connected to the charging interface from the first side. The first mounting portion and the second mounting portion are spaced apart, such that water present on a surface of the first mounting portion facing the charging plug and water present on a surface of the second mounting portion facing the charging plug are not connected. The charging terminal comprises a positive terminal and a negative terminal. The positive terminal is mounted on the first mounting portion, and the negative terminal is mounted on the second mounting portion

According to some embodiments of the present disclosure, at least one of the first mounting portion or the second mounting portion protrudes in a direction away from the first side, such that a gap is formed between the first mounting portion and the second mounting portion, and the first mounting portion and the second mounting portion are spaced apart.

According to some embodiments of the present disclosure, both the first mounting portion and the second mounting portion protrude in the direction away from the first side, and a protrusion height of the first mounting portion is different from a protrusion height of the second mounting portion.

According to some embodiments of the present disclosure, both the first mounting portion and the second mounting portion protrude in the direction away from the first side, and a protrusion height of the first mounting portion is the same as a protrusion height of the second mounting portion.

According to some embodiments of the present disclosure, a depth of the gap is greater than 0.6 mm.

According to some embodiments of the present disclosure, a width of the gap is greater than 0.6 mm.

According to some embodiments of the present disclosure, the charging plug comprises an insulating barrier, and when the charging interface is connected to the charging plug, the insulating barrier is located in the gap.

According to some embodiments of the present disclosure, the insulating barrier mates with the gap and is used for positioning when the charging interface is connected to the charging plug.

According to some embodiments of the present disclosure, the charging receptacle further comprises an insulating plate. The insulating plate is located between the first mounting portion and the second mounting portion, and protrudes relative to the first mounting portion and the second mounting portion in the direction away from the first side, such that the first mounting portion and the second mounting portion are spaced apart.

According to some embodiments of the present disclosure, a height of the insulating plate protruding relative to the first mounting portion and the second mounting portion is not less than 0.6 mm.

According to some embodiments of the present disclosure, a thickness of the insulating plate is not less than 0.6 mm.

According to some embodiments of the present disclosure, the charging plug comprises a groove, and when the charging interface is connected to the charging plug, the insulating plate is located in the groove.

According to some embodiments of the present disclosure, the insulating plate matches the groove, and is used for positioning when the charging interface is connected to the charging plug.

According to some embodiments of the present disclosure, the charging interface further comprises a data transmission terminal mounted on the third mounting portion. The third mounting portion is located between the first mounting portion and the second mounting portion. The third mounting portion protrudes relative to the first mounting portion and the second mounting portion in the direction away from the first side, such that the first mounting portion and the second mounting portion are spaced apart; or the third mounting portion is recessed relative to the first mounting portion and the second mounting portion in a direction toward the first side, to form a gap between the first mounting portion and the second mounting portion, such that the first mounting portion and the second mounting portion are spaced apart.

According to some embodiments of the present disclosure, an arrangement direction of the first mounting portion and the second mounting portion is a length direction of the charging receptacle base.

According to some embodiments of the present disclosure, the third mounting portion is integrally connected with the first mounting portion or the second mounting portion.

According to some embodiments of the present disclosure, the charging interface further includes an adapter plate. The adapter plate is sealedly connected to a second side of the charging receptacle base. A surface of the adapter plate is covered with a sealant. The second side is opposite to the first side and the second side faces an interior of the wearable device.

According to some embodiments of the present disclosure, the charging interface further includes a magnetic device. The magnetic device is mounted on the charging receptacle. The charging plug is provided with an adsorption device, and when the charging interface is connected to the charging plug, the magnetic device and the adsorption device generate an adsorption force.

According to some embodiments of the present disclosure, the charging receptacle base further includes a sidewall located at an edge of the charging receptacle base. The sidewall protrudes from the first side of the charging receptacle base in a direction away from the charging receptacle base to form a positioning slot for positioning when connected to the charging plug.

According to some embodiments of the present disclosure, the first mounting portion and the positive terminal are sealed by a sealant; the second mounting portion and the negative terminal are sealed by the sealant; and the third mounting portion and the data transmission terminal are sealed by the sealant.

According to some embodiments of the present disclosure, a contact angle of a water droplet on the surface of the first mounting portion, the surface of the second mounting portion, or a surface at the gap is at least 60 °.

According to some embodiments of the present disclosure, a contact angle of a water droplet on the surface of the first mounting portion, the surface of the second mounting portion, or a surface of the insulating plate is at least 60 °.

In a second aspect, one or more embodiments of the present disclosure provide a wearable device. The wearable device includes a cavity, an electronic component, and the charging interface according to the first aspect. The electronic component is mounted inside the cavity. The charging receptacle base is mounted on the cavity. The charging terminal and the data transmission terminal are electrically connected to the electronic component. The charging receptacle base and the cavity are sealed by the sealant.

In summary, the charging interface and the wearable device provided by the present disclosure set a plurality of mounting portions on the charging receptacle of the charging interface. The first mounting portion and the second mounting portion for mounting the positive terminal and the negative terminal of the charging terminal are spaced apart, thereby preventing water present on the first mounting portion and water present on the second mounting portion from being connected. In this situation, when water is presented on the positive terminal and the negative terminal, since the first mounting portion and the second mounting portion are spaced apart, water present on the positive terminal and water present on the negative terminal are not connected. When the charging interface is charging, the positive terminal and the negative terminal do not form a short circuit due to the water present on the surfaces, thereby improving the safety performance of the charging interface, expanding the use scenarios of the wearable device, and ensuring that even if the wearable device is used underwater and water adheres to the positive terminal and the negative terminal, it will not cause a short circuit when the charging interface is charging. Meanwhile, the charging interface and the wearable device provided by the present disclosure can improve user experience. After the user uses the wearable device underwater, the user does not need to wipe, clean, and dry the water in the charging interface before charging, and can charge directly, greatly improving the convenience of use.

### BRIEF DESCRIPTION OF THE DRAWINGS

To more clearly illustrate the technical solutions in the embodiments of the present disclosure, the drawings used in the description of the embodiments are briefly introduced below. Obviously, the drawings in the following description are only some embodiments of the present disclosure. For those skilled in the art, other drawings may be obtained based on these drawings without creative effort.
FIG. 1 is a schematic diagram illustrating an exemplary exploded view of a waterproof earphone according to some embodiments of the present disclosure;
FIG. 2 is a schematic diagram illustrating an exemplary front view of a charging interface according to some embodiments of the present disclosure;
FIG. 3 is a schematic diagram illustrating a cross-sectional view taken along line A-A of FIG. 2 according to some embodiments of the present disclosure;
FIG. 4 is a schematic diagram illustrating an exemplary bottom view of a charging interface according to some embodiments of the present disclosure;
FIG. 5 is a schematic diagram illustrating an exemplary rear view of a charging interface according to some embodiments of the present disclosure;
FIG. 6 is a schematic diagram illustrating an exemplary front view of a charging plug according to some embodiments of the present disclosure;
FIG. 7 is a schematic diagram illustrating a cross-sectional view taken along line B-B of FIG. 6 according to some embodiments of the present disclosure;
FIG. 8 is a schematic diagram illustrating an exemplary cross-sectional view of a charging interface connected to a charging plug according to some embodiments of the present disclosure;
FIG. 9 is a schematic diagram illustrating an exemplary cross-sectional view of another charging interface according to some embodiments of the present disclosure;
FIG. 10 is a schematic diagram illustrating an exemplary cross-sectional view of another charging interface according to some embodiments of the present disclosure; and
FIG. 11 is a schematic diagram illustrating an exemplary cross-sectional view of another charging interface according to some embodiments of the present disclosure.

### DETAILED DESCRIPTION

The following description provides specific application scenarios and requirements of the present disclosure and is intended to enable those skilled in the art to make and use the content of the present disclosure. For those skilled in the art, various local modifications to the disclosed embodiments are obvious, and the general principles defined herein may be applied to other embodiments and applications without departing from the spirit and scope of the present disclosure. Therefore, the present disclosure is not limited to the illustrated embodiments, but to the widest scope consistent with the claims.

The terminology used herein is for the purpose of describing particular example embodiments only and is not intended to be limiting. For example, unless the context clearly indicates otherwise, the singular forms "a," "an," and "the" as used herein may also include the plural forms. As used in the present disclosure, the terms "include," "comprise," and/or "contain" mean that the associated integer, step, operation, element, and/or component is present, but do not exclude the presence or addition of one or more other features, integers, steps, operations, elements, components, and/or groups in the system/method.

In the present disclosure, the expression "X includes at least one of A, B, or C" refers to that X includes at least A, or X includes at least B, or X includes at least C. That is, X may include only any combination of A, B, and C, or may include any combination of A, B, and C and other possible content/elements. The any combination of A, B, and C may be A, B, C, AB, AC, BC, or ABC.

In the present disclosure, unless explicitly stated, the association relationship between structures may be a direct association relationship or an indirect association relationship. For example, when describing "A is connected to B", unless it is explicitly stated that A is directly connected to B, it should be understood that A may be directly connected to B or indirectly connected to B. As another example, when describing "A is above B", unless it is explicitly stated that A is directly above B (A and B are adjacent and A is above B), it should be understood that A may be directly above B, or A may be indirectly above B (there are other elements between A and B, and A is above B).

In view of the following description, these and other features of the present disclosure, the operation and function of related elements of the structure, and the combination of parts and the economy of manufacture can be significantly improved. The description also includes all the graphics and text in the reference drawings in the present disclosure, all of which form a part of the present disclosure. However, it should be clearly understood that the drawings are for the purpose of illustration and description only, and are not intended to limit the scope of the present disclosure. It should also be understood that the drawings are not drawn to scale.

The wearable device provided in the present disclosure is a waterproof wearable device. The wearable device can provide a certain waterproof effect, so that the wearable device can be used in special scenarios to prevent water from entering the interior from the exterior to a certain extent, for example, in a scenario of rain, a scenario of swimming, or a scenario of briefly falling into water. The wearable device may include an AR/VR/MR head-mounted all-in-one machine, smart audio glasses, Bluetooth earphones, a wearable speaker, a smart watch, a smart wristband, a smart ring, smart clothing, smart sports shoes, etc. For convenience of presentation, the following content uses a waterproof earphone as an example of the wearable device for description. It should be noted that those skilled in the art should understand that the wearable device, being other devices, is also within the protection scope of the present disclosure.

The waterproof earphones may be any type of waterproof earphones. For example, the waterproof earphone may be a wired waterproof earphone. A receiver of the wired waterproof earphone may receive an electrical signal from a media player through a wired transmission manner, thereby converting the electrical signal into a sound wave that can be heard by the human ear. As another example, the waterproof earphone may be a wireless waterproof earphone. In the wireless waterproof earphone, a receiver may receive the electrical signal from the media player through a wireless transmission manner, thereby converting the electrical signal into the sound wave that can be heard by the human ear. The waterproof earphone may be an air conduction waterproof earphone. The air conduction waterproof earphone may convert the electrical signal into an air vibration signal. The air vibration signal may be transmitted to an ear canal of an ear. An eardrum in the ear may convert the air vibration signal into sound. As still another example, the waterproof earphone may be a bone conduction waterproof earphone. The bone conduction waterproof earphone may convert the electrical signal into a mechanical vibration signal. The mechanical vibration signal may cause vibration of the skull, so that the perilymph produces fluctuations of the same frequency, and excites the spiral organ of the cochlea to produce hearing. It should be noted that the waterproof earphone provided in the present disclosure includes a data storage unit. In this case, the waterproof earphone may not rely on an external media player, and can play audio data stored in the built-in data storage unit when not performing signal transmission with the external media player. The present disclosure does not limit the type of the waterproof earphone.

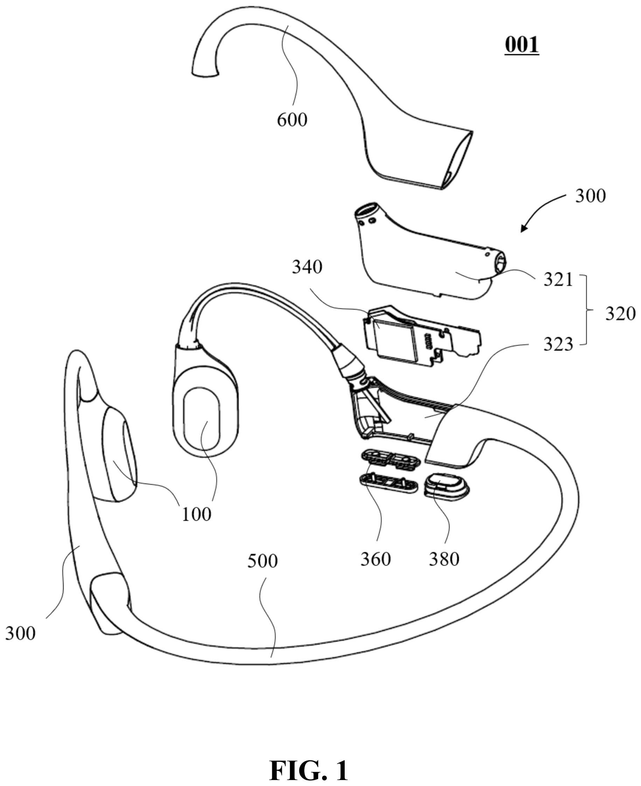

As mentioned above, the wearable device is a waterproof earphone. FIG. 1 is a schematic diagram illustrating an exemplary exploded structure of a waterproof earphone 001 according to some embodiments of the present disclosure. As shown in FIG. 1, the waterproof earphone 001 may include a core assembly 100 and a main body 300. In some embodiments, the waterproof earphone 001 may further include a rear hook assembly 500.

The core assembly 100 may also be referred to as a speaker assembly. The core assembly 100 may convert an electrical signal into a sound wave that can be heard by a human. The count of the core assembly 100 may be one or two. When the count of the core assembly 100 is one, the waterproof earphone 001 may be applied in application scenarios where stereo sound requirements are not particularly high, for example, a hearing aid for hearing patients or a prompt for live broadcast of a host. When a user wears the waterproof earphone 001, the core assembly 100 may be worn on the left ear of the user, or may be worn on the right ear of the user. When the count of the core assembly 100 is two, when the user wears the waterproof earphone 001, the two core assemblies 100 are worn on different ears of the user, respectively. In this case, both of the two core assemblies 100 can produce sound, so that the waterproof earphone 001 has a stereo sound effect, and the user satisfaction of the waterproof earphone 001 is improved. In some embodiments, the two core assemblies 100 may be independently arranged. That is, the two core assemblies 100 may exist independently and may be worn separately. For example, the two core assemblies 100 may be worn on different ears, or worn on ears of different users, making use of the waterproof earphone 001 more flexible. In this case, the two core assemblies 100 may operate independently. In some embodiments, the two core assemblies 100 may also be connected together (e.g., connected together via a rear hook assembly 500). In this case, the two core assemblies 100 may operate simultaneously and achieve unified control for better sound effects. In some embodiments, the core assembly 100 may be an air conduction core. In this case, when the user wears the waterproof earphone 001, the core assembly 100 may be an in-ear type or an open type. In some embodiments, the core assembly 100 may also be a bone conduction core. In this case, when the user wears the waterproof earphone 001, the core assembly 100 may be hung on an exterior of a user's ear. For example, the core assembly 100 may be hung on the exterior of the ear and close to human skin, to transmit sound waves to the interior of the ear through vibration of human skin and bones. In some embodiments, the core assembly 100 may be a combination of the air conduction core and the bone conduction core.

The main body 300 may be electrically connected to the core assembly 100 to control the core assembly 100. In the waterproof earphone 001, the main body 300 may be an ear hook assembly of the waterproof earphone 001. In some embodiments, the main body 300 may receive the electrical signal sent by the external media player and send the electrical signal to the core assembly 100. The main body 300 may include a built-in data storage unit. In this case, the main body 300 may send audio data of the built-in data storage unit to the core assembly 100. A count of the main body 300 may be one or more. In some embodiments, each core assembly 100 may be connected to one main body 300. In some embodiments, the waterproof wearable device is the waterproof earphone 001. The waterproof earphone 001 may include two core assemblies 100, and the two core assemblies 100 may share one main body 300. When the waterproof earphone 001 includes two core assemblies 100 and two main bodies 300, the two core assemblies 100 are electrically connected to the two main bodies 300, respectively. In this case, the two main bodies 300 may be independently arranged to independently control the core assemblies 100. The two main bodies 300 may also be connected together. For example, the two main bodies 300 may be connected together via a rear hook assembly 500, to achieve unified control of the two core assemblies 100.

As shown in FIG. 1, the main body 300 includes a cavity 320, an electronic component 340, and a charging interface 380. In some embodiments, the main body 300 may further include a control button 360.

The cavity 320 may be a mounting base for the electronic component 340. The cavity 320 may be a thin-walled shell structure with a hollow interior. The electronic component 340 may be installed inside the cavity 320. A shape of the cavity 320 may be any shape to adapt to the mounting of other components. The shape of the cavity 320 may be an ergonomic shape to facilitate use by the user. A material of the cavity 320 may be any material, for example, a metal material, a plastic material, or a polymer material. The present disclosure does not limit the shape and material of the cavity 320.

In some embodiments, the cavity 320 may be integrally formed. In some embodiments, the cavity 320 may include at least two shells. For example, the cavity 320 may include two shells, which are a main cavity 321 and a cavity upper cover 323. The main cavity 321 and the cavity upper cover 323 are installed together to form the shell structure with a hollow interior. In some embodiments, the cavity 320 may also be formed by installing more than two shells together, which is not repeated in the present disclosure. The main cavity 321 and the cavity upper cover 323 are thin-walled parts. The main cavity 321 and the cavity upper cover 323 may be installed together and form an accommodation cavity inside. The accommodation cavity may accommodate other components and allow other components to be installed in the accommodation cavity, to protect the other components from dust. For example, the electronic component 340 may be installed inside the cavity 320, for example, installed in the accommodation cavity. A connection between the main cavity 321 and the cavity upper cover 323 may be sealedly connected by a sealant to improve waterproof performance of the cavity 320.

The electronic component 340 may include a circuit board. The core assembly 100 may be electrically connected to the circuit board. The core assembly 100 and the circuit board may be electrically connected via the rear hook assembly 500. The circuit board may control the core assembly 100. The circuit board is a chip integrated circuit that integrates the functions of the waterproof earphone. In some embodiments, the circuit board includes a radio frequency unit (e.g., a communication component such as Bluetooth, Near Field Communication (NFC), WiFi) for receiving and transmitting signals, to communicate with the external media player. The circuit board further includes a data storage unit to store audio data. In some embodiments, the circuit board further includes a CPU unit for processing data and a DSP unit for audio decoding. The circuit board may be used for short-range wireless communication, audio transmission, data transmission, data storage, location services, device networking, etc. The present disclosure does not limit the type of circuit board. Specifically, the circuit board may include a Flexible Printed Circuit (FPC), a Printed Circuit Board (PCB), and a Rigid-Flex Printed Circuit Board (Rigid-Flex PCB). That is, the circuit board may be any circuit or processor capable of performing one or more functions, or any combination thereof.

In some embodiments, the main body 300 may further include the control button 360. The control button 360 may be mounted on the cavity 320 and partially exposed outside the cavity 320 for user operation. The control button 360 may be electrically connected to the circuit board. The user may control the circuit board by operating the control button 360 to control the waterproof earphone 001, so as to implement functions such as turning on, turning off, volume adjustment, and mode switching, thereby improving the intelligence level of the waterproof earphone 001 and enhancing the user experience.

The main body 300 further includes a charging interface 380. When the waterproof earphone 001 includes two main bodies 300, the charging interface 380 may be located in any one of the two bodies 300 and electrically connected to the electronic component 340. The charging interface 380 may be mounted on the cavity 320 and partially exposed outside the cavity 320 to be electrically connected with the charging plug. More descriptions regarding the charging plug may be found elsewhere in the present disclosure. The charging interface 380 may be electrically connected to the electronic component 340 to provide electrical energy to the electronic component 340. The electrical energy may be transmitted to other components through the electronic component 340, such as the core assembly 100. The fixed connection manner between the charging interface 380 and the cavity 320 may include any form, including but not limited to adhesion, riveting, welding, threaded connection, snap connection, etc. The connection between the cavity 320 and the charging interface 380 may also be sealedly connected by the sealant to improve the waterproof performance of the waterproof earphone 001.

In some embodiments, the waterproof earphone 001 may further include a rear hook assembly 500. The rear hook assembly 500 may connect the two core assemblies 100. For example, when the two core assemblies 100 are electrically connected to the two main bodies 300, respectively, the rear-hook assembly 500 may electrically connect the two main bodies 300. As another example, when the two core assemblies 100 share one main body 300, the main body 300 may be close to any one of the two core assemblies 100, and the rear hook assembly 500 may electrically connect the main body 300 to the other one of the two core assemblies 100.

In some embodiments, the rear hook assembly 500 may include a cable. The cable may be any conductive wire, such as a lead wire. The cable is mainly used to achieve an electrical connection between various electronic components of the waterproof earphone 001. For example, when the two core assemblies 100 are electrically connected to the two main bodies 300, respectively, the cable may be used to electrically connect the two main bodies 300. As another example, when the two core assemblies 100 share one main body 300, the main body 300 may be close to any one of the two core assemblies 100, and the cable may be used to electrically connect the main body 300 to the other core assembly 100. The cable may be a single strand or multiple strands. When there are multiple circuits that require electrical connection in the waterproof earphone 001, the cable may be correspondingly provided with multiple strands. For example, the cable may be provided with any number of strands, such as 1 strand, 2 strands, 3 strands, 5 strands, 6 strands, or 8 strands.

In some embodiments, the rear hook assembly 500 may also include an elastic metal wire. The elastic metal wire may adopt an arc-shaped design to provide a certain clamping force for the user when wearing the waterproof earphone. For example, when the two core assemblies 100 are electrically connected to the two main bodies 300, respectively, two ends of the elastic metal wire may be connected to the two main bodies 300, respectively. In this case, when the user wears the waterproof earphone 001, the two main bodies 300 may be respectively hung on the outer sides of the user's two ears, the rear hook assembly 500 is configured to extend around the back of the user's head, and the two core assemblies 100 are located near the two ears, respectively. In this case, the elastic metal wire may provide a certain clamping force to make the two core assemblies 100 closely adhere to the user's skin, thereby improving wearing reliability.

In some embodiments, the waterproof earphone 001 may further include a protective cover 600. The protective cover 600 may cover an outer surface of the core assembly 100. The protective cover 600 may also cover an outer surface of the main body 300. The protective cover 600 may further cover an outer surface of the rear hook assembly 500. The protective cover 600 may be integrally formed or may be formed by splicing a plurality of protective covers. The protective cover 600, the core assembly 100, the main body 300, and the rear hook assembly 500 may be sealedly connected by a sealant to improve the waterproof performance of the waterproof earphone 001. The protective cover 600 may be made of a soft material with a certain elasticity, such as soft silicone or rubber.

It should be noted that the connection between the core assembly 100 and the main body 300 may also be sealedly connected by the sealant to improve the waterproof performance of the waterproof earphone 001. Similarly, the connection between the main body 300 and the rear hook assembly 500 may also be sealedly connected by the sealant to improve the waterproof performance of the waterproof earphone 001.

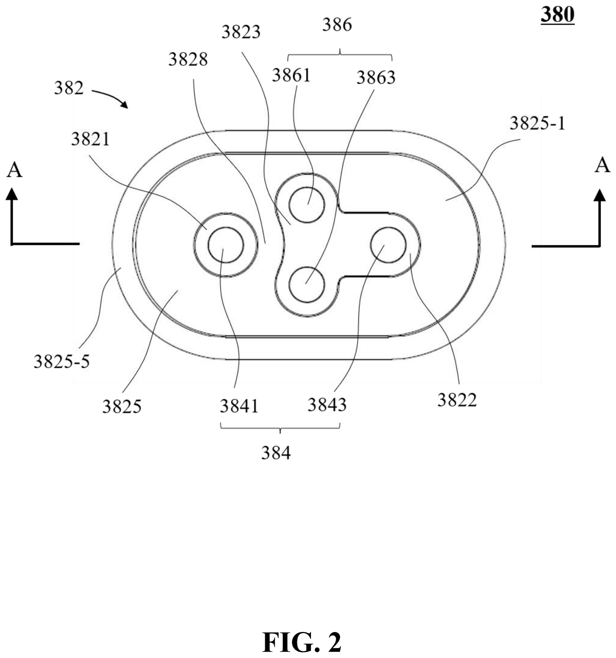

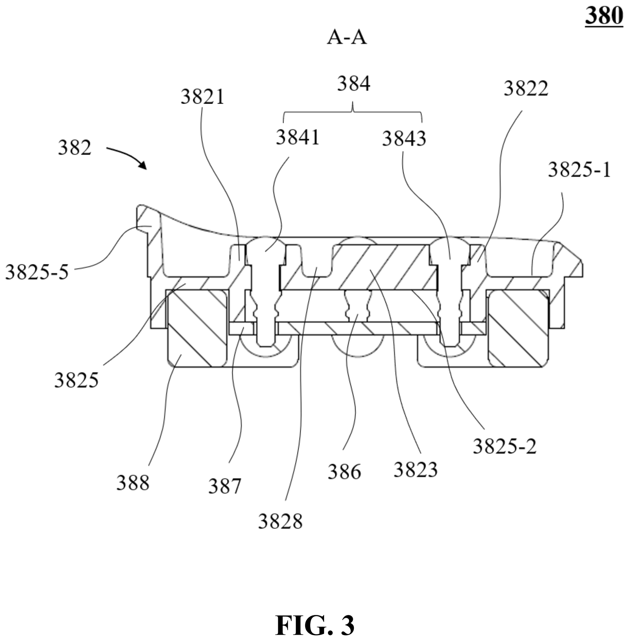

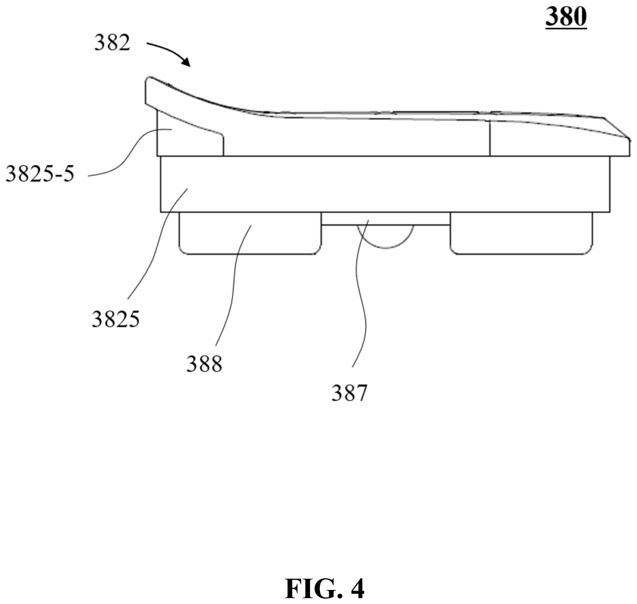

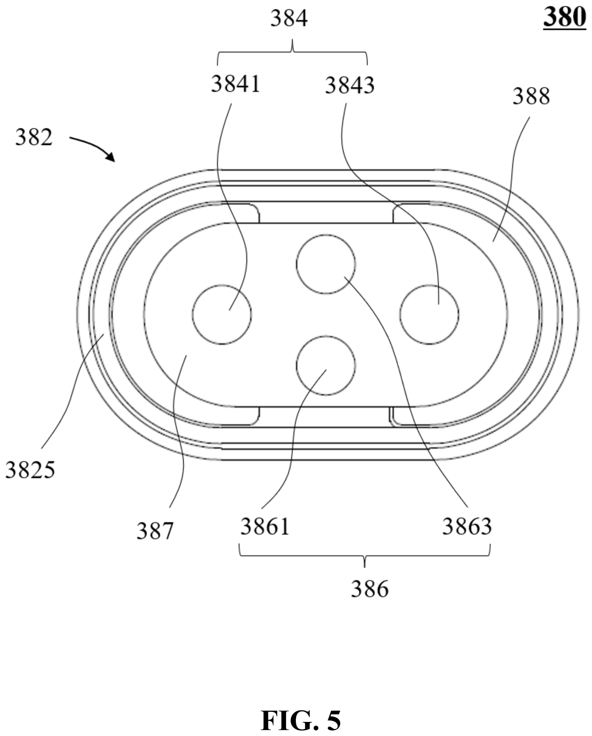

FIG. 2 is a schematic diagram illustrating an exemplary front view of a charging interface 380 according to some embodiments of the present disclosure. FIG. 3 is a schematic diagram illustrating a cross-sectional view taken along line A-A of FIG. 2 according to some embodiments of the present disclosure. FIG. 4 is a schematic diagram illustrating an exemplary bottom view of the charging interface 380 according to some embodiments of the present disclosure. FIG. 5 is a schematic diagram illustrating an exemplary rear view of the charging interface according 380 to some embodiments of the present disclosure. As shown in FIG. 2 to FIG. 5, the charging interface 380 includes a charging receptacle 382, a charging terminal 384, and a data transmission terminal 386. In some embodiments, the charging interface 380 may further include an adapter plate 387. In some embodiments, the charging interface 380 may further include a magnetic device 388.

The charging receptacle 382 may be a base of the charging interface 380. Other components (e.g., the charging terminal 384, the data transmission terminal 386, the adapter plate 387, the magnetic device 388) of the charging interface 380 may use the charging receptacle 382 as a base and be mounted on the charging receptacle 382. The charging receptacle 382 is mounted on the cavity 320 of the main body 300. To improve the waterproof performance of the waterproof earphone 001, the charging receptacle 382 and the waterproof earphone 001 may be sealedly connected by the sealant. One side of the charging receptacle 382 may be exposed outside the cavity 320 for connection with an external charging plug. Another side of the charging receptacle 382 may face an interior of the cavity 320 and may extend into the interior of the cavity 320. The charging receptacle 382 may be a thin-walled plate-like structure, which may be integrally formed or formed separately and then assembled, and during assembly, various parts are sealed and adhered with the sealant. The shape of the charging receptacle 382 may be any shape to adapt to the mounting of other components. A base material of the charging receptacle 382 may be an insulating material, such as plastic, polymer material, or resin, and the shape may be rectangular, circular, or other irregular shapes.

The charging terminal 384 is mounted on the charging receptacle 382. Specifically, a hole is provided on the charging receptacle 382. The charging terminal 384 is arranged through the hole. That is, one end of the charging terminal 384 is arranged on one side of the hole, and the other end of the charging terminal 384 is arranged on the other side of the hole. The portion of the charging terminal 384 in contact with the hole is sealedly connected to the hole via the sealant. The charging terminal 382 may be electrically connected to the electronic component 340. Specifically, the charging terminal 382 may be electrically connected to the electronic component 340 to supply power to the electronic component 340. When the charging interface 380 is connected to an external charging plug for charging, the charging terminal 384 may be electrically connected to a power source of the charging plug. The charging terminal 384 may include a positive terminal 3841 and a negative terminal 3843. At least a portion of the positive terminal 3841 and the negative terminal 3843 is exposed to an exterior of the charging receptacle 382. When the charging interface 380 is connected to the external charging plug for charging, the positive terminal 3841 is electrically connected to a positive electrode of the external power source, and the negative terminal 3843 is electrically connected to a negative electrode of the external power source. The positive terminal 3841 and the negative terminal 3843 are spaced apart to prevent a short circuit caused by contact between the positive and negative electrodes. In a scenario where a user swims, although a large amount of water on the charging interface 380 is removed after getting out of the water, a small amount of water remains present on a surface of the positive terminal 3841 and the negative terminal 3843. Specifically, when the user holds the rear hook assembly 500 and forcefully shakes off the water present on the surface of the waterproof earphone 001, the rear hook assembly 500 rotates around the wrist. At this time, water accumulated in the charging interface 380 is subjected to centrifugal force. A large amount of the water, subjected to a centrifugal force greater than an adhesion force between the water and the charging interface 380, detaches from the charging interface 380. A small amount of the water, subjected to a centrifugal force less than the adhesion force between the water and the charging interface 380, remains on the surface of the charging interface 380. This water remaining on the surface of the charging interface 380 may easily connect the positive terminal 3841 and the negative terminal 3843. To prevent water present on the surfaces of the positive terminal 3841 and the negative terminal 3843 from connecting the positive and negative electrodes to form the short circuit when the charging interface 382 is charging, the positive terminal 3841 and the negative terminal 3843 are spaced apart, such that the water present on the surfaces of the positive terminal 3841 and the negative terminal 3843 can't be connected.

The data transmission terminal 386 may be mounted on the charging receptacle 382. The data transmission terminal 386 may be electrically connected to the electronic component 340. For example, the data transmission terminal 386 may be electrically connected to the data storage unit on the circuit board to perform data transmission with the data storage unit. The data transmission terminal 386 may include a first terminal 3861 and a second terminal 3863. When the charging interface 380 is connected to the charging plug, the data transmission terminal 386 may communicate with an electronic device connected to the charging plug to enable data transmission between the electronic device and the storage unit.

It should be noted that the charging terminal 384 and the data transmission terminal 386 may respectively perform corresponding functions or jointly perform corresponding functions. Specifically, the charging terminal 384 and the data transmission terminal 386 may perform a charging function and a data transmission function, respectively. The charging terminal 384 may perform the charging function. The charging terminal 384 and the data transmission terminal 386 may together perform the data transmission function.

In some embodiments of the present disclosure, the charging interface 380 further includes the adapter plate 387. The adapter plate 387 may be located on a side of the charging receptacle 382 facing an interior of the wearable device (e.g., an interior of the cavity 320). The adapter plate 387 may be sealedly connected to the charging receptacle 382 to prevent water from passing through the charging receptacle 382 from the exterior of the charging receptacle 382 into the interior of the wearable device (e.g., the interior of the cavity 320). The adapter plate 387 and the charging receptacle 382 may be sealedly connected via the sealant.

As described above, the charging terminal 384 and the data transmission terminal 386 may be electrically connected to the electronic component 340. Specifically, the charging terminal 384 and the data transmission terminal 386 may be electrically connected to the electronic component 340 via the cable. To ensure the sealing property between the adapter plate 387 and the charging receptacle 382, the charging terminal 384 and the data transmission terminal 386 may be soldered to the cable on the adapter plate 387. A surface of the adapter plate 387 facing the interior of the cavity 320 is covered with the sealant to seal soldered joints among the charging terminal 384, the data transmission terminal 386, and the cable.

In some embodiments of the present disclosure, the charging interface 380 further includes the magnetic device 388. The magnetic device 388 may be mounted on the side of the charging receptacle 382 facing the interior of the wearable device (e.g., the interior of the cavity 320). The charging plug is provided with an adsorption device. When the charging interface 380 is connected to the charging plug, the magnetic device 388 and the adsorption device generate an adsorption force, thereby securely connecting the charging interface 380 and the charging plug together. Connecting the charging interface 380 and the charging plug via the adsorption device and the magnetic device 388 not only fixes the charging interface 380 and the charging plug, but also allows for quick alignment of the charging interface 380 and the charging plug due to corresponding positions of the adsorption device and the magnetic device 388, achieving accurate connection and increasing connection reliability and operational convenience. The adsorption device and the magnetic device 388 may be two magnets that attract each other. It should be noted that the magnetic device 388 may be arranged on the charging plug, and the adsorption device may be arranged on the charging interface 380, which is not limited herein.

The magnetic device 388 may be arranged at any position of the charging interface 380, for example, on the charging receptacle 382. Furthermore, the magnetic device 388 may be arranged at any position on the charging receptacle 382, for example, between the charging terminal 384 and the data transmission terminal 386; as another example, between the positive terminal 3841 and the negative terminal 3843.

As shown in FIG. 2 to FIG. 5, the charging receptacle 382 includes a charging receptacle base 3825, a first mounting portion 3821, a second mounting portion 3822, and a third mounting portion 3823. In some embodiments of the present disclosure, the charging receptacle base 3825, the first mounting portion 3821, the second mounting portion 3822, and the third mounting portion 3823 are an integral whole (i.e., integrally formed). In some embodiments of the present disclosure, the charging receptacle base 3825, the first mounting portion 3821, the second mounting portion 3822, and the third mounting portion 3823 are separate and fixedly connected together. Manners of fixed connection include, but are not limited to, adhesion, welding, riveting, threaded connection, etc. In the embodiment shown in FIG. 2 to FIG. 5, the charging receptacle base 3825, the first mounting portion 3821, the second mounting portion 3822, and the third mounting portion 3823 are integrally formed.

As described above, the charging receptacle 382 may be mounted on the cavity 320. Specifically, the charging receptacle 382 may be mounted to the cavity 320 via the charging receptacle base 3825. The charging receptacle base 3825 and the cavity 320 may be sealedly connected via the sealant. The charging receptacle base 3825 includes a first side 3825-1 and a second side 3825-2. The first side 3825-1 is opposite to the second side 3825-2. The first side 3825-1 faces an exterior of the wearable device (e.g., the waterproof earphone 001). The second side 3825-2 faces an interior of the wearable device (e.g., the waterproof earphone 001). When the charging interface 380 is connected to a third-party charging plug, the third-party charging plug is connected to the charging interface 380 from the first side 3825-1.

In some embodiments, the charging receptacle base 3825 further includes a sidewall 3825-5. The sidewall 3825-5 is located at an edge of the charging receptacle base 3825, and protrudes from the first side 3825-1 of the charging receptacle base 3825 in a direction away from the charging receptacle base 3825 to form a positioning slot for positioning when connected to the charging plug. The sidewall 3825-5 may be located at the edge of the charging receptacle base 3825 and form a closed slot along the edge. When the charging receptacle base 3825 is installed with the cavity 320, an exterior of the sidewall 3825-5 may be used for mounting with the cavity 320 and sealed with the sealant.

As described above, the adapter plate 387 may be sealedly connected to the side of the charging receptacle 382 facing the interior of the wearable device. Specifically, the adapter plate 387 may be sealedly connected to a side of the second side 3825-2 of the charging receptacle base 3825. For example, the second side 3825-2 of the charging receptacle base 3825 may include a protrusion extending in a direction away from the second side 3825-2. The adapter plate 387 may be sealedly connected to the protrusion to seal the charging terminal 384 and the data transmission terminal 386 within a space formed by the protrusion and the adapter plate 387. As described above, the magnetic device 388 may be installed on the side of the charging receptacle 382 facing the interior of the wearable device (e.g., the interior of the cavity 320). Specifically, the magnetic device 388 may be installed on the second side 3825-2 of the charging receptacle base 3825. For example, the magnetic device 388 may be installed at a periphery of the protrusion.

The first mounting portion 3821, the second mounting portion 3822, and the third mounting portion 3823 are located on the first side 3825-1 of the charging receptacle base 3825 and are connected to the first side 3825-1. The positive terminal 3841 is fixedly installed on the first mounting portion 3821. The first mounting portion 3821 includes a mounting hole. The positive terminal 3841 may be fixedly mounted on the mounting hole of the first mounting portion 3821, and at least a portion of the positive terminal 3841 is exposed outside the first mounting portion 3821 to electrically connect to the charging plug. The manner for fixing the positive terminal 3841 to the first mounting portion 3821 includes, but is not limited to, adhesion, snap-fit connection, welding, interference fit, etc. To improve the waterproof performance of the charging interface 380, the sealant may be filled between the positive terminal 3841 and the mounting hole of the first mounting portion 3821 to form a sealed connection. The negative terminal 3843 is mounted on the second mounting portion 3822. The second mounting portion 3822 includes a mounting hole. The negative terminal 3843 may be fixedly mounted on the mounting hole of the second mounting portion 3822, and at least a portion of the negative terminal 3843 is exposed outside the second mounting portion 3822 to electrically connect to the charging plug. The manner for fixing the negative terminal 3843 to the second mounting portion 3822 includes, but is not limited to, adhesion, snap-fit connection, welding, interference fit, etc. To improve the waterproof performance of the charging interface 380, the sealant may be filled between the negative terminal 3843 and the mounting hole of the second mounting portion 3822 to form the sealed connection. The data transmission terminal 386 is mounted on the third mounting portion 3823. The third mounting portion 3823 includes a mounting hole. The data transmission terminal 386 may be fixedly mounted on the mounting hole of the third mounting portion 3823, and at least a portion of the data transmission terminal 386 is exposed outside the third mounting portion 3823 to electrically connect to the charging plug. The manner for fixing the data transmission terminal 386 to the third mounting portion 3823 includes, but is not limited to, adhesion, snap-fit connection, welding, interference fit, etc. To improve the waterproof performance of the charging interface 380, the sealant may be filled between the data transmission terminal 386 and the mounting hole of the third mounting portion 3823 to form the sealed connection. As described above, the data transmission terminal 386 includes the first terminal 3861 and the second terminal 3863. Correspondingly, the third mounting portion 3823 may include two mounting holes for mounting the first terminal 3861 and the second terminal 3863, respectively.

As described above, to prevent water present on the positive terminal 3841 and the negative terminal 3843 from connecting the positive and negative electrodes to form a short circuit during charging of the charging interface 382, the positive terminal 3841 and the negative terminal 3843 are spaced apart, so that water present on the positive terminal 3841 and the negative terminal 3843 cannot connect. Therefore, the first mounting portion 3821 and the second mounting portion 3822 are spaced apart, such that water present on a surface of the first mounting portion 3821 facing the charging plug and water present on a surface of the second mounting portion 3822 facing the third-party charging plug are not connected. Since at least a portion of the positive terminal 3841 is exposed outside the first mounting portion 3821, and at least a portion of the negative terminal 3843 is exposed outside the second mounting portion 3822, when the water present on the surface of the first mounting portion 3821 facing the charging plug and the water present on the surface of the second mounting portion 3822 facing the third-party charging plug are not connected, the water present on the portion of the positive terminal 3841 exposed outside the first mounting portion 3821 and the water present on the portion of the negative terminal 3843 exposed outside the second mounting portion 3822 are also not connected.

The spaced arrangement between the first mounting portion 3821 and the second mounting portion 3822 may be achieved in various ways. In some embodiments, the spaced arrangement between the first mounting portion 3821 and the second mounting portion 3822 may be achieved by providing a gap between the first mounting portion 3821 and the second mounting portion 3822. In some embodiments, the spaced arrangement between the first mounting portion 3821 and the second mounting portion 3822 may be achieved by providing an insulating plate between the first mounting portion 3821 and the second mounting portion 3822. In the embodiments shown in FIG. 2 to FIG. 5, the spaced arrangement between the first mounting portion 3821 and the second mounting portion 3822 may be achieved by providing the gap between the first mounting portion 3821 and the second mounting portion 3822. Other implementations of the spaced arrangement between the first mounting portion 3821 and the second mounting portion 3822 may be found elsewhere in the present disclosure.

As shown in FIG. 2 to FIG. 5, at least one of the first mounting portion 3821 and the second mounting portion 3822 protrudes in a direction away from the first side 3825-1, thereby forming a gap 3828 between the first mounting portion 3821 and the second mounting portion 3822, and the gap 3828 causes the first mounting portion 3821 and the second mounting portion 3822 to be spaced apart. For example, the first mounting portion 3821 may protrude in the direction away from the first side 3825-1, while the second mounting portion 3822 does not protrude. For example, the second mounting portion 3822 may protrude in the direction away from the first side 3825-1, while the first mounting portion 3821 does not protrude. As another example, both the first mounting portion 3821 and the second mounting portion 3822 protrude in the direction away from the first side 3825-1.

When both the first mounting portion 3821 and the second mounting portion 3822 protrude in the direction away from the first side 3825-1, protrusion heights of the first mounting portion 3821 and the second mounting portion 3822 may be the same or different. When the charging receptacle base 3825 includes the sidewall 3825-5 and the protrusion heights of the first mounting portion 3821 and the second mounting portion 3822 are the same, the protrusion heights of the first mounting portion 3821 and the second mounting portion 3822 may be higher than the height of the sidewall 3825-5, or the protrusion heights of the first mounting portion 3821 and the second mounting portion 3822 may be equal to or lower than the height of the sidewall 3825-5. In the scenario described above, after the user swims ashore, a large amount of water on the charging interface 380 is removed, but a small amount of water remains present on the first mounting portion 3821 and the second mounting portion 3822. The protrusion heights of the first mounting portion 3821 and the second mounting portion 3822 may have any relationship with the height of the sidewall 3825-5, for example, higher, lower, or equal. In this situation, water present on the surface of the first mounting portion 3821 facing the charging plug and water present on the surface of the second mounting portion 3822 facing the charging plug cannot connect, and the positive terminal 3841 and the negative terminal 3843 mounted on the first mounting portion 3821 and the second mounting portion 3822, respectively will not connect to form the short circuit during charging. In some scenarios, a large amount of water accumulates and gathers in the charging receptacle base 3825, and there is a possibility of simultaneously submerging the surface of the first mounting portion 3821 facing the charging plug and the surface of the second mounting portion 3822 facing the charging plug. In this situation, the protrusion heights of the first mounting portion 3821 and the second mounting portion 3822 are higher than the height of the sidewall 3825-5. When water enters and gathers in the charging receptacle base 3825, the surface of the first mounting portion 3821 facing the charging plug and the surface of the second mounting portion 3822 facing the charging plug are not submerged by the water, that is, water present within the sidewall 3825-5 cannot connect, and the positive terminal 3841 and the negative terminal 3843 mounted on the first mounting portion 3821 and the second mounting portion 3822 respectively will not connect to form the short circuit during charging.

When the charging receptacle base 3825 includes the sidewall 3825-5 and the protrusion heights of the first mounting portion 3821 and the second mounting portion 3822 are different, the protrusion height of one of the first mounting portion 3821 and the second mounting portion 3822 with the higher protrusion height is higher than the height of the sidewall 3825-5. In this situation, when water enters and gathers in the charging receptacle base 3825, the surface of the first mounting portion 3821 facing the charging plug and the surface of the second mounting portion 3822 facing the charging plug are not simultaneously submerged by the water, and the positive terminal 3841 and the negative terminal 3843 mounted on the first mounting portion 3821 and the second mounting portion 3822 respectively will not connect to form the short circuit during charging.

To reduce the possibility of water present on the surface of the first mounting portion 3821 facing the charging plug and water present on the surface of the second mounting portion 3822 facing the charging plug being connected, a size of the gap 3828 between the first mounting portion 3821 and the second mounting portion 3822 is preferably as large as possible within an allowable size range. The larger the size of the gap 3828, the greater the volume of water that may be accommodated within the gap 3828, and the less likely that the water present on the surface of the first mounting portion 3821 facing the charging plug and the water present on the surface of the second mounting portion 3822 facing the charging plug connect. In some embodiments, the size of the gap 3828 is related to the material of the first mounting portion 3821 and the second mounting portion 3822. For example, the material of the first mounting portion 3821 and the second mounting portion 3822 is a hydrophobic material, such as polyolefin, polycarbonate, polyamide, polyacrylonitrile, polyester, fluorinated polyethylene, or fluorocarbon wax. Additionally, a roughness of the surface of the first mounting portion 3821 facing the charging plug and a roughness of the surface of the second mounting portion 3822 facing the charging plug are preferably as small as possible within an allowable range, so as to form a smooth surface on the surface of the first mounting portion 3821 facing the charging plug and the surface of the second mounting portion 3822 facing the charging plug, thereby increasing hydrophobicity. Furthermore, a nano-treatment may be performed on the surface of the first mounting portion 3821 facing the charging plug and the surface of the second mounting portion 3822 facing the charging plug to increase hydrophobicity.

In some embodiments, the hydrophobicity may be measured using a contact angle measurement method. Furthermore, a contact angle may be calculated based on a Young-Laplace equation and the concept of surface tension. Specifically, a surface energy of water droplets on the surface of the first mounting portion 3821 facing the charging plug and the surface of the second mounting portion 3822 facing the charging plug may be measured, and the contact angle may be calculated based on the Young-Laplace equation. It is also possible to directly measure the contact angle. Specifically, the surface of the first mounting portion 3821 facing the charging plug and the surface of the second mounting portion 3822 facing the charging plug may be cleaned and dried, ensuring that there are no impurities or dirt. Then, a dropper or a needle is used to carefully drop a droplet onto each surface, a shape of the droplet on each surface is recorded with a microscope or a camera, and an angle between the droplet and a surface contact line is measured. The measured angle is the contact angle of the droplet.

If the contact angle between the water droplet and the surface is large, it indicates that the surface has good hydrophobicity, which means that the water droplet is difficult to spread on the surface. For example, if the water droplet forms a large contact angle on the surface of the first mounting portion 3821, it indicates that the first mounting portion 3821 has good hydrophobicity. As another example, if the water droplet forms a large contact angle on the surface of the second mounting portion 3822, it indicates that the second mounting portion 3822 has good hydrophobicity. As still another example, if the water droplet forms a large contact angle on the surface of the gap 3828, it indicates that the surface of the gap 3828 has good hydrophobicity. The contact angle of the water droplet is at least 60°, for example, 60°, 70°, 80°, 90°, and 100°. Those skilled in the art should understand that other methods of measuring contact angles are also within the scope of protection of the present disclosure.

It should be noted that the range of values and measurement methods for the contact angle mentioned above are applicable to any structure with water droplets attached to any surface in the present disclosure, such as the third mounting portion 3823, the gap 3828, the sidewall 3825-5, etc. The contact angle of the surface of the first mounting portion 3821 is at least 60° and/or the contact angle of the surface of the second mounting portion 3822 is at least 60° and/or the contact angle of the surface of the gap 3828 is at least 60°. That is, the contact angle of the surface of the first mounting portion 3821, the contact angle of the surface of the second mounting portion 3822, and the contact angle of the surface of the gap 3828 may all satisfy at least 60° simultaneously, or they may satisfy at least 60° separately. When at least one of the contact angles of the surface of the first mounting portion 3821, the surface of the second mounting portion 3822, and the surface of the gap 3828 is at least 60 degrees, the water stains on the surface of the first mounting portion and the surface of the second mounting portion will not be connected, avoiding a short circuit.

When the material of the first mounting portion 3821 and the second mounting portion 3822 is more prone to water adhesion, the size of the gap 3828 is larger. In some embodiments, to ensure that the water present on the surface of the first mounting portion 3821 facing the charging plug and the water present on the surface of the second mounting portion 3822 facing the charging plug are not connected, a depth of the gap 3828 is greater than 0.6 mm, and a width of the gap 3828 is greater than 0.6 mm. A width direction of the gap 3828 may be an arrangement direction of the first mounting portion 3821 and the second mounting portion 3822. A depth direction of the gap 3828 may be a direction in which the first mounting portion 3821 and the second mounting portion 3822 protrude.

In some embodiments, to increase the width of the gap 3828, the arrangement direction of the first mounting portion 3821 and the second mounting portion 3822 may be set along a length direction of the charging receptacle base 3825, to increase a distance between the positive terminal 3841 and the negative terminal 3843. Additionally, to further increase the width of the gap 3828, the third mounting portion 3823 may be disposed between the first mounting portion 3821 and the second mounting portion 3822, to serve as a partition between the first mounting portion 3821 and the second mounting portion 3822. In some embodiments, the arrangement direction of the first terminal 3861 and the second terminal 3863 may be set along the width direction of the charging receptacle base 3825, to reduce an overall size of the charging receptacle 382.

In some embodiments, to reduce processing difficulty and improve ease of use, the third mounting portion 3823 may be integrally connected with the first mounting portion 3821 or the second mounting portion 3822. In this case, the third mounting portion 3823 may also protrude in the direction away from the first side 3825-1, and the protrusion height is consistent with a height of the first mounting portion 3821 or the second mounting portion 3822 to which the third mounting portion 3823 is connected.

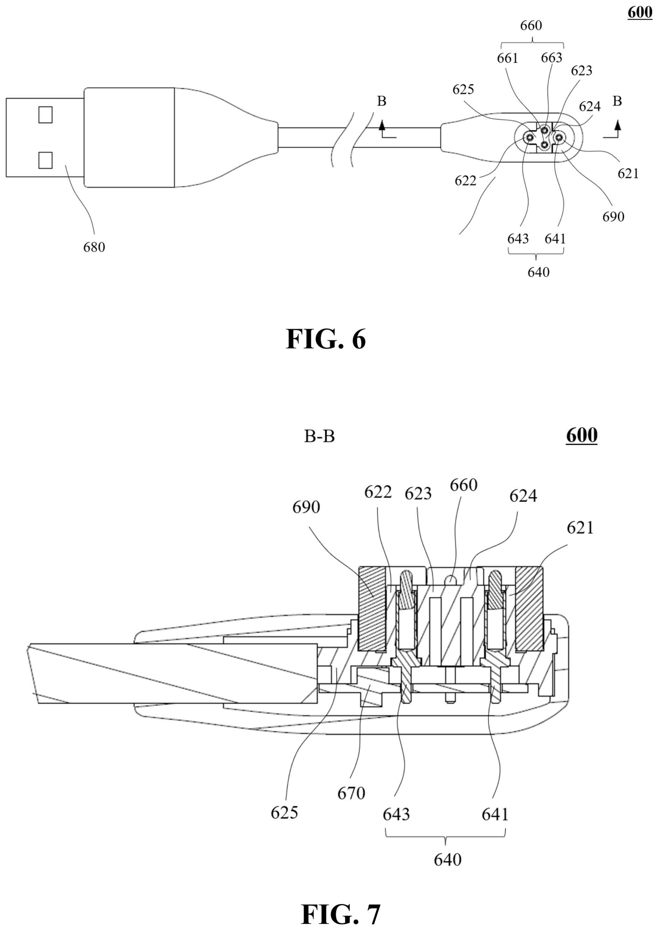

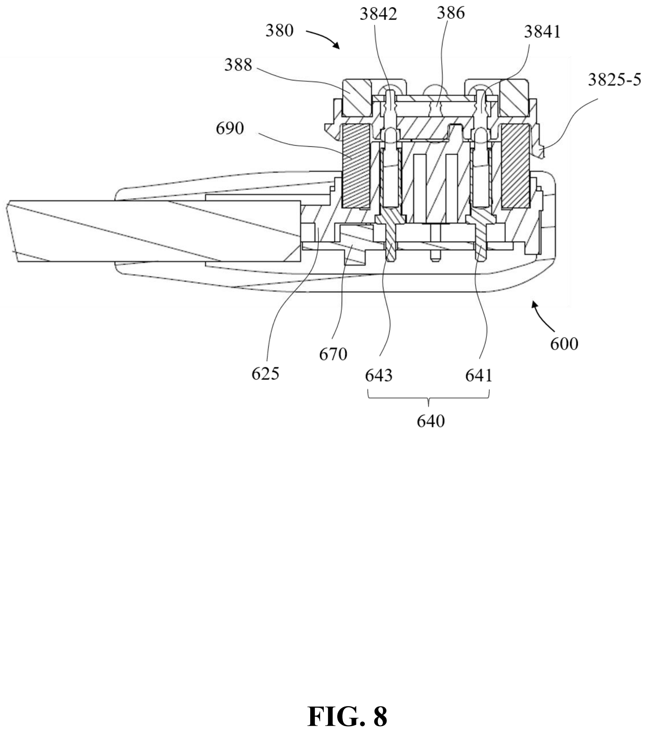

The present disclosure further provides a charging plug 600 configured to connect to the charging interface 380 during operation. The charging interface 380 is connected to an external power supply device and/or a data transmission device via the charging plug 600. FIG. 6 is a schematic diagram illustrating an exemplary front view of a charging plug 600 according to some embodiments of the present disclosure. FIG. 7 is a schematic diagram illustrating a cross-sectional view taken along line B-B of FIG. 6 according to some embodiments of the present disclosure. FIG. 8 is a schematic diagram illustrating an exemplary cross-sectional view of the charging interface 380 connected to the charging plug 600 according to some embodiments of the present disclosure. As shown in FIG. 6 to FIG. 8, the charging plug 600 includes a charging cavity 620, a charging probe 640, and a data transmission probe 660. In some embodiments, the charging plug 600 further includes a charging circuit board assembly 670. In some embodiments, the charging plug 600 further includes a transmission interface 680. In some embodiments, the charging plug 600 further includes an adsorption device 690.

The charging probe 640 includes a positive probe 641 and a negative probe 643. When the charging interface 380 is connected to the charging plug 600, the positive terminal 3841 contacts the positive probe 641 to establish an electrical connection. The negative terminal 3843 contacts the negative probe 643 to establish an electrical connection. The positive probe 641 and the negative probe 643 may be elastic probes, so that when the charging interface 380 is connected to the charging plug 600, reliable contact may be achieved between the positive terminal 3841 and the positive probe 641, and between the negative terminal 3843 and the negative probe 643.

The data transmission probe 660 includes a first probe 661 and a second probe 663. When the charging interface 380 is connected to the charging plug 600, the first terminal 3861 contacts the first probe 661 to establish an electrical connection. The second terminal 3863 contacts the second probe 663 to establish the electrical connection. The first probe 661 and the second probe 663 may be elastic probes, so that when the charging interface 380 is connected to the charging plug 600, reliable contact may be achieved between the first terminal 3861 and the first probe 661, and between the second terminal 3863 and the second probe 663.

The charging cavity 620 may be a mounting base for the charging probe 640 and the data transmission probe 660. The charging cavity 620 may be a thin-walled plate-like structure. The charging probe 640 and the data transmission probe 660 may be mounted on the charging cavity 620. A shape of the charging cavity 620 may be any shape to accommodate the mounting of other components. A base material of the charging cavity 620 may be an insulating material, such as plastic, polymer material, or resin, and the shape may be rectangular. The shape of the charging cavity 620 may be adapted to the shape of the charging receptacle 382.

The charging cavity 620 includes a charging cavity base 625, a fourth mounting portion 621, a fifth mounting portion 622, and a sixth mounting portion 623. The charging cavity base 625 may serve as a carrier for other components and is configured to carry other components, such as the charging probe 640, the data transmission probe 660, the fourth mounting portion 621, the fifth mounting portion 622, and the sixth mounting portion 623.

The fourth mounting portion 621, the fifth mounting portion 622, and the sixth mounting portion 623 are connected to a side of the charging cavity base 625 facing outward (the charging interface 380). The fourth mounting portion 621, the fifth mounting portion 622, the sixth mounting portion 623, and the charging cavity base 625 may be integrally formed. For example, the positive probe 641 may be mounted on the fourth mounting portion 621, the negative probe 643 may be mounted on the fifth mounting portion 622 and the data transmission probe 660 may be mounted on the sixth mounting portion 623. To achieve an accurate connection between the charging interface 380 and the charging plug 600, a position, a shape, and a size of the first mounting portion 3821 match a position, a shape, and a size of the fourth mounting portion 621. A position, a shape, and a size of the second mounting portion 3822 match a position, a shape, and a size of the fifth mounting portion 622. A position, a shape, and a size of the third mounting portion 3823 match a position, a shape, and a size of the sixth mounting portion 623.

In some embodiments, the charging cavity 620 may further include a baffle 624. The baffle 624 is disposed between the fourth mounting portion 621 and the fifth mounting portion 622. The baffle 624 may protrude relative to the fourth mounting portion 621 and the fifth mounting portion 622 in a direction away from the fourth mounting portion 621 and the fifth mounting portion 622. When the first mounting portion 3821 and the second mounting portion 3822 are spaced apart by the gap 3828, the baffle 624 may be inserted into the gap 3828 between the first mounting portion 3821 and the second mounting portion 3822 when the charging interface 380 is connected to the charging plug 600, further ensuring that water present on the surface of the first mounting portion 3821 and water on the surface of the second mounting portion 3822 are not connected, thereby preventing the positive terminal 3841 and the negative terminal 3843 from forming the short circuit during charging. A material of the baffle 624 may be an insulating material.

In some embodiments, the charging plug 600 further includes the charging circuit board assembly 670. The charging circuit board assembly 670 is mounted on the charging cavity 620 and is electrically connected to the charging probe 640 and the data transmission probe 660.

One end of the transmission interface 680 is electrically connected to the charging circuit board assembly 670, and the other end is configured to connect to an external power supply device and/or a data transmission device.

When the charging interface 380 is connected to the charging plug 600, the adsorption device 690 may be adsorbed to the magnetic device 388.

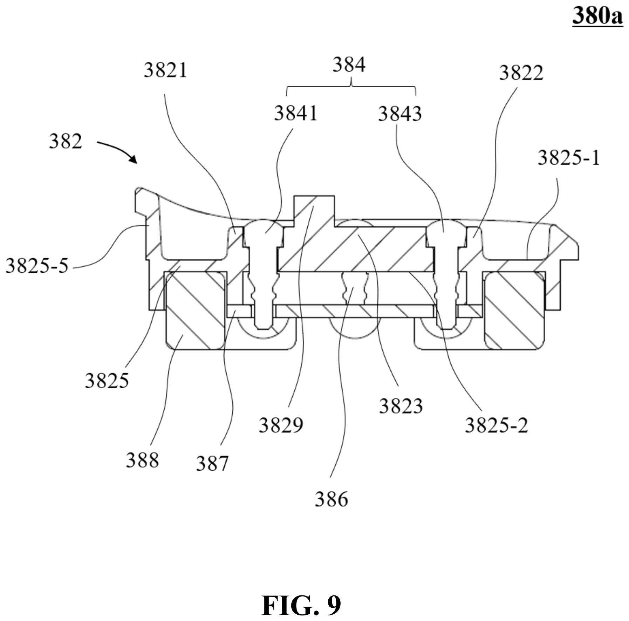

As mentioned above, the spaced arrangement between the first mounting portion 3821 and the second mounting portion 3822 may also be achieved by other means, such as providing an insulating barrier between the first mounting portion 3821 and the second mounting portion 3822. FIG. 9 is a schematic diagram illustrating an exemplary cross-sectional view of another charging interface 380 according to some embodiments of the present disclosure. For convenience of description, the charging interface shown in FIG. 9 is defined as a charging interface 380a. As shown in FIG. 9, an insulating plate 3829 may be provided between the first mounting portion 3821 and the second mounting portion 3822 in the charging interface 380a.

The charging receptacle 382 further includes the insulating plate 3829. The insulating plate 3829 is located between the first mounting portion 3821 and the second mounting portion 3822 and protrudes relative to the first mounting portion 3821 and the second mounting portion 3822 in the direction away from the first side 3825-1, such that the first mounting portion 3821 and the second mounting portion 3822 are spaced apart. In this case, water present on the surface of the first mounting portion 3821 facing the charging plug and water present on the surface of the second mounting portion 3822 facing the charging plug are not connected, and the positive terminal 3841 and the negative terminal 3843 mounted on the first mounting portion 3821 and the second mounting portion 3822 are not connected, thereby preventing the short circuit when the charging interface 380a is connected to the charging plug.

Furthermore, the insulating plate 3829 may be straight or curved. When the insulating plate 3829 is a curved plate, a curvature center of the insulating plate 3829 may be set away from the rear hook assembly 500 to facilitate water drainage, thereby preventing the short circuit when the charging interface 380a is connected to the charging plug.

To reduce the possibility of a connection between water present on the surface of the first mounting portion 3821 facing the charging plug and water present on the surface of the second mounting portion 3822 facing the charging plug, the size of the insulating plate 3829 between the first mounting portion 3821 and the second mounting portion 3822 is preferably as large as possible within allowable dimensional constraint. The larger the size of the insulating plate 3829, the less likely that water present on the surface of the first mounting portion 3821 facing the charging plug and water present on the surface of the second mounting portion 3822 facing the charging plug are connected. In some embodiments, the size of the insulating plate 3829 is related to the materials of the first mounting portion 3821 and the second mounting portion 3822. When the materials of the first mounting portion 3821 and the second mounting portion 3822 are more prone to retaining water, the size of the insulating plate 3829 is larger. In some embodiments, to ensure that water present on the surface of the first mounting portion 3821 facing the charging plug and water present on the surface of the second mounting portion 3822 facing the charging plug are not connected, a protrusion height of the insulating plate 3829 relative to the first mounting portion 3821 and the second mounting portion 3822 is greater than 0.6 mm. In some embodiments, a thickness of the insulating plate 3829 is greater than 0.6 mm.

In order to further improve the waterproof performance, the insulating plate 3829 may be made of hydrophobic material. Furthermore, the contact angle of the water droplets attached to the insulating plate 3829 should be at least 60°, such as 60°, 70°, 80°, 90°, or 100°. The contact angle measurement method of water droplets attached to the insulating plate 3829 is consistent with the previous measurement method and will not be repeated here. Those skilled in the art should understand that other methods of measuring contact angles are also within the scope of protection of the present disclosure.

The contact angle of the surface of the first mounting portion 3821 is at least 60° and/or the contact angle of the surface of the second mounting portion 3822 is at least 60° and/or the contact angle of the surface of the insulating plate 3829 is at least 60°. That is, the contact angle of the surface of the first mounting portion 3821, the contact angle of the surface of the second mounting portion 3822, and the contact angle of the surface of the insulating plate 3829 may all satisfy at least 60° simultaneously, or they may satisfy at least 60° separately. When at least one of the contact angles of the surface of the first mounting portion 3821, the surface of the second mounting portion 3822, and the surface of the insulating plate 3829 is at least 60 degrees, the water stains on the surface of the first mounting portion 3821 and the second mounting portion 3822 will not be connected, avoiding a short circuit.

It should be noted that, to match the charging interface 380a, a groove is provided between the fourth mounting portion 621 and the fifth mounting portion 622 of the charging plug. When the charging interface 380a is connected to the charging plug, the insulating plate 3829 is located in the groove. The insulating plate 3829 mates with the groove and may be used for positioning when the charging interface 380a is connected to the charging plug. The term "mate with" may mean that the shapes and sizes of mating surfaces of the insulating plate 3829 and the groove match. When the insulating plate 3829 engages with the groove, the insulating plate 3829 snaps into the groove.

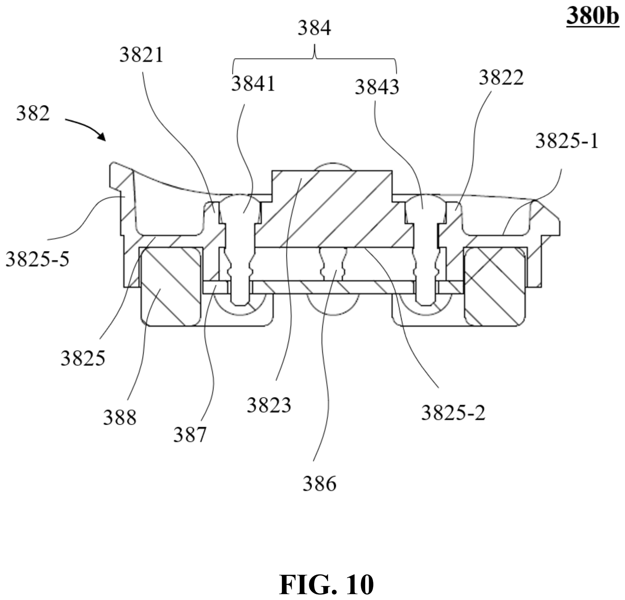

In some embodiments, the spaced arrangement between the first mounting portion 3821 and the second mounting portion 3822 may be achieved by disposing the third mounting portion 3823 between the first mounting portion 3821 and the second mounting portion 3822. FIG. 10 is a schematic diagram illustrating an exemplary cross-sectional view of another charging interface 380 according to some embodiments of the present disclosure. For convenience of description, the charging interface shown in FIG. 10 is defined as a charging interface 380b. As shown in FIG. 10, the third mounting portion 3823 is located between the first mounting portion 3821 and the second mounting portion 3822, wherein the third mounting portion 3823 protrudes relative to the first mounting portion 3821 and the second mounting portion 3822 in a direction away from the first side 3825-1, such that the first mounting portion 3821 and the second mounting portion 3822 are spaced apart by the third mounting portion 3823. In this case, the third mounting portion 3823 may serve the function of the aforementioned insulating plate 3829. The principle for preventing the short circuit is described above and will not be repeated here.

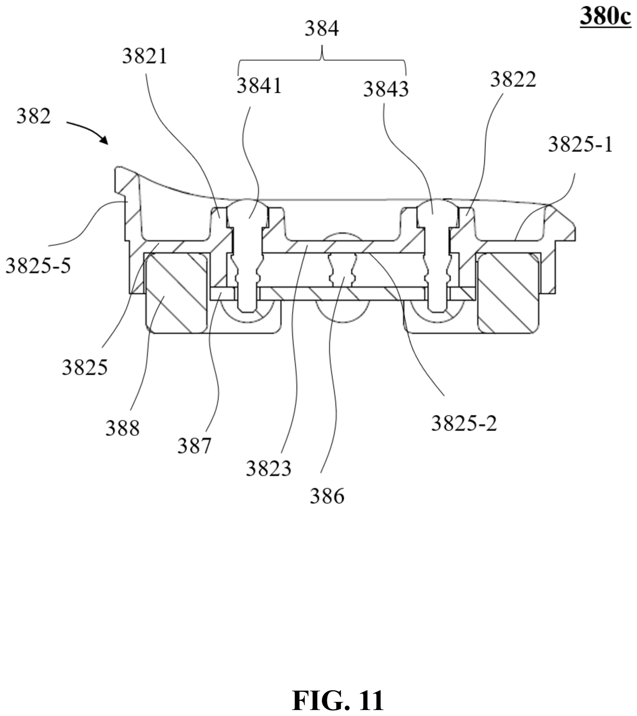

FIG. 11 is a schematic diagram illustrating an exemplary cross-sectional view of another charging interface 380 according to some embodiments of the present disclosure. For convenience of description, the charging interface shown in FIG. 10 is defined as a charging interface 380c. As shown in FIG. 11, the third mounting portion 3823 is recessed relative to the first mounting portion 3821 and the second mounting portion 3822 in a direction toward the first side 3825-1, to form a gap 3828 between the first mounting portion 3821 and the second mounting portion 3822, such that the first mounting portion 3821 and the second mounting portion 3822 are spaced apart. In this case, the recess at the third mounting portion 3823 may serve the function of the aforementioned gap 3828. The principle for preventing the short circuit is described above and will not be repeated here.

The sealant used for the aforementioned bonding includes instant adhesive (e.g., 502 glue), epoxy resin adhesive, anaerobic adhesive, UV adhesive (ultraviolet light curing type), hot melt adhesive, pressure sensitive adhesive, latex type, silicone type, etc.

In summary, the present disclosure provides the charging interface 380 and the wearable device. By providing a plurality of mounting portions on the charging receptacle 382 of the charging interface 380 (wherein the first mounting portion 3821 and the second mounting portion 3822 for mounting the positive terminal 3841 and the negative terminal 3843 of the charging terminal 384 are spaced apart), a connection of water present on the first mounting portion 3821 and water present on the second mounting portion 3822 is prevented. In this case, when water is present on the positive terminal 3841 and on the negative terminal 3843, the water present on the positive terminal 3841 and the water present on the negative terminal 3843 are not connected because the first mounting portion 3821 and the second mounting portion 3822 are spaced apart. When the charging interface 380 is charging, the positive terminal 3841 and the negative terminal 3843 do not form a short circuit due to water present on their surfaces, thereby improving the safety performance of the charging interface 380 and expanding the usage scenarios of the wearable device, such that even if the positive terminal 3841 and the negative terminal 3843 get wet during underwater use of the wearable device, it will not cause the short circuit when the charging interface 380 is charging. Simultaneously, the charging interface 380 and the wearable device provided in the present disclosure can enhance user experience. After using the wearable device underwater, the user does not need to wipe, clean, or dry water in the charging interface 380 before charging, enabling immediate charging and greatly improving convenience.

The foregoing describes specific embodiments of the present disclosure. Other embodiments are within the scope of the appended claims. In some cases, the actions or steps recited in the claims may be performed in an order different from that in the embodiments and still achieve desired results. Additionally, the processes depicted in the accompanying drawings do not necessarily require showing a specific order or sequential order to achieve the desired results. In some embodiments, multitasking and parallel processing are possible or may be advantageous.

In conclusion, after reading this detailed disclosure, those skilled in the art will understand that the foregoing detailed disclosure is presented by way of example only and may not be limiting. Although not explicitly stated herein, those skilled in the art will understand that the present disclosure is intended to encompass various reasonable changes, improvements, and modifications to the embodiments. These changes, improvements, and modifications are intended to be suggested by the present disclosure and are within the spirit and scope of the exemplary embodiments of the present disclosure.

Furthermore, certain terms in the present disclosure have been used to describe the embodiments of the present disclosure. For example, "an embodiment," "embodiment," and/or "some embodiments" mean that a specific feature, structure, or characteristic described in connection with the embodiment may be included in at least one embodiment of the present disclosure. Therefore, it can be emphasized and should be understood that two or more references to "an embodiment" or "one embodiment" or "an alternative embodiment" in various parts of the present disclosure do not necessarily all refer to the same embodiment. Furthermore, specific features, structures, or characteristics may be appropriately combined in one or more embodiments of the present disclosure.

It should be understood that in the foregoing description of the embodiments of the present disclosure, for the purpose of helping to understand a feature and simplifying the present disclosure, the present disclosure combines various features in a single embodiment, drawing, or description thereof. However, this does not mean that the combination of these features is necessary. Those skilled in the art, when reading the present disclosure, may extract a portion of the features as a separate embodiment for understanding. That is, the embodiments in the present disclosure may also be understood as an integration of multiple sub-embodiments. Each sub-embodiment is also valid when its content includes fewer than all features of a single aforementioned disclosed embodiment.

Each patent, patent application, publication of a patent application, and other materials, such as articles, books, specifications, publications, documents, items, etc., cited herein may be incorporated by reference. All contents are incorporated for all purposes, except for any prosecution file history associated therewith, any prosecution file history of the same that may be inconsistent or conflict with this document, or any prosecution file history of the same that may have a limiting effect on the broadest scope of the claims. The prosecution file history is now or later associated with this document. For example, if there is any inconsistency or conflict between the description, definition, and/or use of terms associated with any incorporated material and the description, definition, and/or use of terms related to this document, the terms in this document prevail.

Finally, it should be understood that the embodiments of the present disclosure disclosed herein are illustrative of the principles of the embodiments of the present disclosure. Other modified embodiments are also within the scope of the present disclosure. Therefore, the embodiments disclosed in the present disclosure are merely by way of example and not limitation. Those skilled in the art may adopt alternative configurations based on the embodiments in the present disclosure to implement the application in the present disclosure. Therefore, the embodiments of the present disclosure are not limited to the embodiments precisely described in the present disclosure.

## Claims

1. A charging interface of a wearable device, comprising:
a charging receptacle, comprising a charging receptacle base, a first mounting portion, a second mounting portion, and a third mounting portion, wherein
the first mounting portion, the second mounting portion, and the third mounting portion are connected to a first side of the charging receptacle base, wherein the first side faces an exterior of the wearable device, and a third-party charging plug is connected to the charging interface from the first side; and
the first mounting portion and the second mounting portion are spaced apart, such that water present on a surface of the first mounting portion facing the charging plug and water present on a surface of the second mounting portion facing the charging plug are not connected; and
a charging terminal, comprising a positive terminal and a negative terminal, wherein the positive terminal is mounted on the first mounting portion, and the negative terminal is mounted on the second mounting portion.

2. The charging interface according to claim 1, wherein at least one of the first mounting portion or the second mounting portion protrudes in a direction away from the first side, such that a gap is formed between the first mounting portion and the second mounting portion, and the first mounting portion and the second mounting portion are spaced apart.

3. The charging interface according to claim 2, wherein both the first mounting portion and the second mounting portion protrude in the direction away from the first side, and a protrusion height of the first mounting portion is different from a protrusion height of the second mounting portion.

4. The charging interface according to claim 2 or 3, wherein both the first mounting portion and the second mounting portion protrude in the direction away from the first side, and a protrusion height of the first mounting portion is the same as a protrusion height of the second mounting portion.

5. The charging interface according to any one of claims 2 to 4, wherein a depth of the gap is greater than 0.6 mm.

6. The charging interface according to any one of claims 2 to 4, wherein a width of the gap is greater than 0.6 mm.

7. The charging interface according to any one of claims 2 to 6, wherein the charging plug comprises an insulating barrier, and when the charging interface is connected to the charging plug, the insulating barrier is located in the gap.

8. The charging interface according to claim 7, wherein the insulating barrier mates with the gap and is used for positioning when the charging interface is connected to the charging plug.

9. The charging interface according to claim 1, wherein the charging receptacle further comprises an insulating plate, wherein the insulating plate is located between the first mounting portion and the second mounting portion, and protrudes relative to the first mounting portion and the second mounting portion in the direction away from the first side, such that the first mounting portion and the second mounting portion are spaced apart.

10. The charging interface according to claim 9, wherein a height of the insulating plate protruding relative to the first mounting portion and the second mounting portion is not less than 0.6 mm.

11. The charging interface according to claim 9 or 10, wherein a thickness of the insulating plate is not less than 0.6 mm.

12. The charging interface according to any one of claims 9 to 11, wherein the charging plug comprises a groove, and when the charging interface is connected to the charging plug, the insulating plate is located in the groove.

13. The charging interface according to claim 12, wherein the insulating plate mates with the groove and is used for positioning when the charging interface is connected to the charging plug.

14. The charging interface according to claim 1, wherein the charging interface further comprises a data transmission terminal mounted on the third mounting portion, the third mounting portion being located between the first mounting portion and the second mounting portion; wherein
the third mounting portion protrudes relative to the first mounting portion and the second mounting portion in the direction away from the first side, such that the first mounting portion and the second mounting portion are spaced apart; or
the third mounting portion is recessed relative to the first mounting portion and the second mounting portion in a direction toward the first side, to form a gap between the first mounting portion and the second mounting portion, such that the first mounting portion and the second mounting portion are spaced apart.

15. The charging interface according to any one of claims 1 to 14, wherein an arrangement direction of the first mounting portion and the second mounting portion is a length direction of the charging receptacle base.

16. The charging interface according to any one of claims 1 to 15, wherein the third mounting portion is integrally connected with the first mounting portion or the second mounting portion.

17. The charging interface according to any one of claims 1 to 16, further comprising:
an adapter plate, sealedly connected to a second side of the charging receptacle base, wherein
a surface of the adapter plate is covered with a sealant; and
the second side is opposite to the first side, and the second side faces an interior of the wearable device.

18. The charging interface according to any one of claims 1 to 17, further comprising:
a magnetic device mounted on the charging receptacle, wherein the charging plug is provided with an adsorption device, and when the charging interface is connected to the charging plug, the magnetic device and the adsorption device generate an adsorption force.

19. The charging interface according to any one of claims 1 to 18, wherein the charging receptacle base further comprises:
a sidewall located at an edge of the charging receptacle base, wherein the sidewall protrudes from the first side of the charging receptacle base in a direction away from the charging receptacle base to form a positioning slot for positioning when connected to the charging plug.

20. The charging interface according to any one of claims 14 to 19, wherein
the first mounting portion and the positive terminal are sealed by a sealant;
the second mounting portion and the negative terminal are sealed by the sealant; and
the third mounting portion and the data transmission terminal are sealed by the sealant.

21. The charging interface according to claim 2, wherein a contact angle of a water droplet on the surface of the first mounting portion, the surface of the second mounting portion, or a surface at the gap is at least 60 °.

22. The charging interface according to claim 9, wherein a contact angle of a water droplet on the surface of the first mounting portion, the surface of the second mounting portion, or a surface of the insulating plate is at least 60 °.

23. A wearable device, comprising:
a cavity;
an electronic component, mounted inside the cavity; and
the charging interface of any one of claims 1-22, wherein the charging receptacle base is mounted on the cavity, the charging terminal and the data transmission terminal are electrically connected to the electronic component, and the charging receptacle base and the cavity are sealed by the sealant.
